# EUROPEAN PATENT APPLICATION

(11) **EP 3 832 265 A1**
(43) Date of publication of application: **09.06.2021**
(21) Application number: 19212858.5
(22) Date of filing: 02.12.2019
(51) Int. Cl.: G01F 1/66

(54) **A FLOW MEASURING DEVICE**

(71) Applicant: IMI Hydronic Engineering International SA, 1262 Eysins (CH)
(72) Inventor: JÖNSSON, Anders, 523 76 Blidsberg (SE)
(74) Representative: Zacco Sweden AB

(57) **Abstract**

A flow measuring device, comprising a housing, a channel extending through the housing, a first transducer, a second transducer located downstream of the first transducer, a first reflecting surface, a second reflecting surface located downstream of the first reflecting surface. The first and second reflecting surfaces are located and directed such that an ultrasonic beam transmitted by the first transducer is redirected by the first reflecting surface to the second reflecting surface and then to the second transducer, and vice versa. The ultrasonic beam travels between the first and second reflecting surfaces in a direction obliquely to a main flow direction.

## Description

### TECHNICAL FIELD

The present application relates to a flow measuring device, comprising a housing and a channel extending through the housing, wherein the channel is configured to guide a flowing liquid from an inlet to an outlet.

### BACKGROUND ART

Devices using ultrasonic beams for measuring flow through a conduit have been used in different configurations. A method referred to as "time of flight" uses two transducers sending and receiving ultrasonic signals upstream and downstream in the flowing medium. By calculating the difference in time for the ultrasonic signals to travel upstream versus downstream, the velocity of the medium can be established in the area where the ultrasonic beam travels.

The velocity profile of a flowing medium is affected by various factors, for instance, a turbulent flow will have a different velocity profile compared to a laminar flow. Therefore, to obtain an average velocity profile measurement, one possibility is to place one of the transducers on one side of the conduit and the other transducer on an opposite side (making sure that the transducers are also separated in the flow direction), so that ultrasonic signals are transmitted obliquely to the conduit, thereby covering a major part of the velocity profile.

However, from a production point of view, it is quite complex to produce housings and assemblies for the transducers on different sides of the conduit, and therefore it is normally preferable to place the transducers on the same side and instead use reflecting surfaces to redirect the ultrasonic signals.

EP 0 897 101 B1 discloses a device in which the transducers are placed on the same side of the conduit and reflecting surface are used for redirecting the ultrasonic signals, so that they travel along a substantially U-shaped path from one transducer to the other. While this may provide a strong and good signal quality due to relatively few directional changes of the ultrasonic signals and may be easy to produce, there is a risk of reduced flow measuring accuracy compared to an oblique measurement. Also, the upstream reflector may generate flow perturbations, which may affect the flow profile in a negative way, lowering the measuring accuracy.

Thus, it would be desirable to provide a flow measuring device which is not only easy to produce, but also provides good flow measuring accuracy.

### SUMMARY OF THE INVENTION

An object of the invention is to alleviate the drawbacks of the prior art. This and other objects, which will become apparent in the following, are accomplished by a flow measuring device defined in claim 1.

The present invention is based on the realization that the production advantages of the U-shaped ultrasonic signal path may be maintained while the measuring accuracy may be improved, namely by skewing the ultrasonic signal path so that a skewed U-shaped path is obtained. More specifically, by placing the reflecting surfaces at different separating distances relative to a respective transducer, an oblique path of the ultrasonic signal is achievable, thus increasing the measuring accuracy.

According to a first aspect of the invention, there is provided a flow measuring device, comprising:
- a housing,
- a channel extending through the housing, the channel having an inlet and an outlet located downstream of the inlet, wherein the channel is configured to guide a flowing liquid from the inlet to the outlet, wherein the liquid flows in a main flow direction from the inlet to the outlet,
- a first transducer,
- a second transducer, located downstream of the first transducer, wherein each one of the first and second transducer is configured to transmit an ultrasonic beam to be received by the other one of the first and second transducer,
- a processing circuitry configured to compare the time of flight of a first ultrasonic beam transmitted from the first transducer and received by the second transducer, with the time of flight of a second ultrasonic beam transmitted from the second transducer and received by the first transducer,
- a first reflecting surface,
- a second reflecting surface, located downstream of the first reflecting surface, wherein the first and second reflecting surfaces are located and directed such that the first ultrasonic beam transmitted by the first transducer is redirected by the first reflecting surface to the second reflecting surface and then to the second transducer, wherein the second ultrasonic beam transmitted by the second transducer is redirected by the second reflecting surface to the first reflecting surface and then to the first transducer,
wherein the first ultrasonic beam redirected by the first reflecting surface travels to the second reflecting surface in a direction obliquely to said main flow direction, wherein the second ultrasonic beam redirected by the second reflecting surface travels to the first reflecting surface in a direction obliquely to said main flow direction.

The travel of the first ultrasonic beam between the first and second reflecting surfaces is suitably the reverse direction compared to the travel of the second ultrasonic beam between the second and first reflecting surfaces.

The main flow direction may suitably be regarded as the direction in which the liquid flows when it travels past the first and second reflecting surfaces, i.e. when it travels through the relevant measuring region.

The housing may be in the form of a short piece of conduit or pipe, which may have two opposite ends for being connected to other conduit/pipe parts upstream and downstream of the housing. The housing is intended to be connected to such conduit/pipe parts such that when a liquid flows through the housing, it will first pass the first transducer and first reflecting surface, and then pass the second transducer and second reflecting surface. The housing defines a channel through which the liquid may flow. The housing and/or the channel may have any suitable design, for example the cross-section may be circular, elliptical, rectangular, etc. Furthermore, although the housing and/or the channel may be substantially symmetrical having a well-defined central geometrical axis, it is conceivable to have asymmetrical designs as well. For instance, the channel may have a varying width along the main flow direction, such as a different channel diameter at the first transducer compared to a channel diameter at the second transducer. In other exemplary embodiments, the channel diameter may be substantially the same at the first and the second transducers.

The first and second transducers may each be single transducers. However, in some exemplary embodiments, each one of the first and second transducers can form part of multiple transducers. Thus, the first transducer may be one of a first group of transducers for sending ultrasonic beams towards the first reflecting surface, and the second transducer may be one of a second group of transducers for sending ultrasonic beams towards the second reflecting surface. The transducers may have any suitably operating frequency, such as 1 MHz, 2 MHz, or 4 MHz. They may suitably be controlled by means of a processing circuitry which includes, or which is included in, a control unit.

The expression "processing circuitry" as used above should be understood to include any type of computing device, such as an ASIC, a micro-processor, etc. It should also be understood that the actual implementation of such a processing circuitry may be divided between more than a single device/circuit. For instance, one device/circuit of the processing circuitry may control the transmission and/or reception of ultrasonic beams, while another device/circuit of the processing circuitry may calculate the velocity profile, and a third device/circuit of the processing circuitry may store the calculated values and communicate the values to other devices. Of course, it is also conceivable that the processing circuitry has only one device/circuit which is used for all of the just mentioned actions.

The first and second reflecting surfaces may, for instance, be made of, or comprise, stainless steel, brass (or other similar material), plastics, ceramics, surface treated materials, etc.

By having each transducer associated with a respective reflecting surface, a relatively focussed ultrasonic beam may be sent from the transducer to the associated reflecting surface and vice versa. Thus, having a first transducer/reflecting surface pair and a second transducer/reflecting surface pair also improves the accuracy compared to if only one transducer would be used for communicating with two reflecting surfaces. Each transducer, may suitably be mounted in a wall portion of the housing, the transducers being spaced apart along a direction parallel to said main flow direction.

According to at least one exemplary embodiment, the first reflecting surface is spaced from the first transducer by a first distance, and the second reflecting surface is spaced from the second transducer by a second distance, wherein the second distance is shorter than the first distance, wherein said first distance is measured from the first transducer to the centre of the first reflecting surface, and said second distance is measured from the second transducer to the centre of the second reflecting surface.

By having a smaller spacing between the second transducer and second reflecting surface compared to the spacing between the first transducer and the first reflecting surface, and aligning the first and the second reflecting surfaces so that an ultrasonic beam from one of the transducers is redirected by its associated reflecting surface to the other reflecting surface, the travel path of the -ultrasonic beam between the reflecting surfaces may cross a larger cross-section of the channel than if the reflecting surfaces would be levelled with each other. Thus, a more accurate measurement is obtainable by making use of an obliquely travelling ultrasonic beam. However, it should be noted that in other exemplary embodiments, the spacing between the second transducer and the second reflecting surface may be equal to or even larger than the spacing between the first transducer and the first reflecting surface. This may be the case if for instance the wall thickness at the first transducer is much thicker than the wall thickness at the second transducer. The first transducer may in such case become located relatively close to the first reflecting surface, and still the locations of the first and the second reflecting surfaces are skewed so as to enable the oblique travel of the redirected ultrasonic beams between the reflecting surfaces.

According to at least one exemplary embodiment, an ultrasonic beam which is redirected from one of the first and second reflecting surfaces towards the other one of the first and second reflecting surfaces travels obliquely to the main flow direction (and possibly obliquely to a geometrical centre axis extending in or in parallel with the main flow direction) between the first and second reflecting surfaces. The obliqueness of the travel path between the reflecting surfaces, i.e. the angle of the ultrasonic beam between the reflecting surfaces relative to the main flow direction may depend on the diameter of the channel, the spacing in the main flow direction and other factors. The oblique ultrasonic beam may cross a substantial portion of the cross-section of the channel. For instance, it may cover approximately between 40% and 100% of the cross-section of the flowing liquid. This is reflected in for example the following exemplary embodiment(s).

According to at least one exemplary embodiment, the channel has an inner diameter measured from one of the first and second transducers perpendicularly to the geometrical centre axis, wherein a centre of the first reflecting surface and a centre of the second reflecting surface are spaced from each other in a direction extending perpendicularly to said geometrical centre axis by a distance of between 40% and 100% of said inner diameter. This enables a large part of the velocity profile of the flow to be covered, and thus provide accurate measurements.

According to at least one exemplary embodiment, said channel has a geometrical centre axis, wherein said geometrical centre axis is located between the first reflecting surface and the first transducer, wherein the second reflecting surface is located at said geometrical centre axis or between said geometrical centre axis and the second transducer. For a symmetrical velocity profile, the leading end or forward part of the profile is normally located at the geometrical centre axis. By having the first reflecting surface on one side of the geometrical centre axis and the second reflecting surface on the geometrical centre axis or at the other side of the geometrical centre axis, a satisfactory part of the velocity profile may be covered by the traveling oblique ultrasonic beam. For a symmetrical velocity profile, it may indeed be accurate enough to place the second reflecting surface on the geometrical centre axis, since the part of the velocity profile on one side of the geometrical centre axis will be a mirror image of the part on the other side of the geometrical centre axis. For an asymmetrical velocity profile, placing the first reflecting surface on one side of the geometrical centre axis, and the second reflecting surface on the other side of the geometrical centre axis, will provide more accurate measurements.

Suitably, the above discussed first and second distances between transducers and reflecting surfaces, and/or the above discussed distance between the reflecting first and second reflecting surfaces, may suitably be measured to a centre of the respective reflecting surface. For instance, the separating distance between the first (or second) transducer and the first (or second) reflecting surface, is suitably measured from the emitting point of the transducer to the centre of the reflecting surface. Similarly, the separation distance between the two reflecting surfaces is suitably based on a distance measurement from a first geometrical line crossing the centre of the first reflecting surface to a second geometrical line crossing the centre of the second reflecting surface, wherein the first and second geometrical lines and the geometrical centre axis extend in parallel with each other, and wherein the distance measurement is measured perpendicularly to the geometrical centre axis.

From the above, it follows that in at least some exemplary embodiments, the centre of the second reflecting surface may be crossed by the geometrical centre axis. Such an embodiment may, in line with the above discussions, suitably be used for flow measurements of flows having a symmetrical velocity profile. In other exemplary embodiments, the centre of the second reflecting surface may be slightly displaced from the geometrical centre axis so that a minor portion of the reflecting surface is on the same side of the geometrical centre axis as the first reflecting surface while a major portion is on the other side of the geometrical centre axis.

The reflecting surface may be supported in different ways. For instance, they may be axially supported, by supports extending axially from the housing, such as from the inlet and/or the outlet. In other exemplary embodiments the supports may extend radially from the circumferential wall of the housing. In further embodiments, a hybrid solution is conceivable in which one support extends radially from a circumferential wall of the housing while another support may extend axially. In still further embodiments, the reflecting surfaces may be provided in an insert inside the housing.

According to at least one exemplary embodiment, the housing has a first wall portion and a second wall portion, wherein the second wall portion is located diametrically opposed to the first wall portion, wherein the first and second transducers are located in the first wall portion and the first and second reflecting surfaces are provided on first and second supports, respectively, wherein the first and second supports extend from the second wall portion. Suitably, the first support (and the thereon provided first reflecting surface) extends less than half the distance between the first and second wall portions. Suitably, the second support (and the thereon provided second reflecting surface) extends beyond the geometrical centre axis and more than half the distance between the first and second wall portions.

According to at least one exemplary embodiment, the first reflecting surface is made in one piece with the first support and the second reflecting surface is made in one piece with the second support. This is advantageous from a production point of view. However, in other embodiments, it is conceivable to have one or both of the reflecting surfaces manufactured as separate parts which are subsequently attached to the first and second support, respectively.

According to at least one exemplary embodiment, the first reflecting surface has a normal which forms a first angle of less than 45° relative to an incident beam from the first transducer. In particular, the normal suitably forms said first angle of less than 45° relative to an incident beam which is directed perpendicular to the geometrical centre axis. By having said angle below 45°, an incident beam which has passed the geometrical centre axis and which has then become reflected at the first reflecting surface will continue its travel as a reflected beam obliquely to the geometrical centre axis, i.e. in a direction towards the geometrical centre axis. In contrast, if the angle would have been 45°, then an incident beam which is directed perpendicularly to the geometrical centre axis, would after reflection be heading in parallel with the geometrical centre axis.

According to at least one exemplary embodiment, the first angle is in the range of 10° - 42°, such as 35° - 42°. The angle chosen for a particular flow measuring device may be chosen based on its intended use. For example, if the flow measuring device is intended to be used with relatively large valves, and therefore the channel diameter is relatively largely dimensioned, then a relatively smaller angle may suitably be chosen. On the other hand, if the flow measuring device is intended to be used with relatively small valves, then a relatively large angle may suitable be chosen.

According to at least one exemplary embodiment, the second reflecting surface has a normal which forms a second angle of more than 45° relative to an incident beam from the second transducer. In particular, the normal suitably forms said second angle of more than 45° relative to an incident beam which is directed perpendicular to the geometrical centre axis. By having said angle above 45° for a second reflecting surface located between the second transducer and the geometrical centre axis, an incident beam from the second transducer which is reflected at the second reflecting surface will continue its travel as a reflected beam obliquely to the geometrical centre axis, i.e. in a direction towards the geometrical centre axis. In contrast, if the angle would have been 45°, then an incident beam from the second transducer which is directed perpendicularly to the geometrical centre axis, would after reflection be heading in parallel with the geometrical centre axis.

According to at least one exemplary embodiment, the second angle is in the range of 48° - 80°, such as 48° - 55°. The angle chosen for a particular flow measuring device may be chosen based on its intended use. For example, if the flow measuring device is intended to be used with relatively large valves, and therefore the channel diameter is relatively largely dimensioned, then a relatively large angle may suitably be chosen. On the other hand, if the flow measuring device is intended to be used with relatively small valves, then a relatively small angle may suitable be chosen.

According to at least one exemplary embodiment, the sum of the first and second angles is 90°. This provides for accurate flow measurements, in particular if the incident beams from the transducers towards the respective reflecting surfaces are directed perpendicularly to the geometrical centre axis. However, it should be understood that other sums of the angle are also conceivable. For instance, if the transducers do not direct the beam perpendicularly to the centre axis, then the sum of the first and second angles may in some exemplary embodiments be different from 90°. This may for instance be the case, if one of the transducers directs its beam slightly in the upstream direction while the other transducer directs its beam in the downstream direction. However, if each one of the transducers directs its beam in the same direction (for instance slightly upstream) and at the same angle relative to the geometrical centre axis, then said sum of the first and the second angle may still be 90°.

As already indicated above, the spacing between the first transducer and the first reflecting surface, i.e. said first distance, is suitably measured from the first transducer to the centre of the first reflecting surface, and similarly, the spacing between the second transducer and the second reflecting surface, i.e. said shorter second distance, is suitably measured from the second transducer to the centre of the second reflecting surface. According to at least one exemplary embodiment, the first reflecting surface is spaced from the first transducer along a first direction forming an angle of 80°-100°, suitably 90°, relative to said main flow direction, and wherein the second reflecting surface is spaced from the second transducer along a second direction forming an angle of 80°-100°, suitably 90°, relative to said main flow direction. Thus, the first distance may suitably be measured perpendicularly or transversely to the geometrical centre axis. Likewise, the shorter second distance may suitably be measured perpendicularly or transversely to the geometrical centre axis. Aligning the transducers with their respective reflecting surface perpendicularly to the geometrical centre axis is advantageous from a manufacturing point of view, and also allows a set-up which may provide accurate flow measurements.

As previously mentioned, the flow measuring device comprises a processing circuitry configured to compare the time of flight of a first ultrasonic beam transmitted from the first transducer and received by the second transducer, with the time of flight of a second ultrasonic beam transmitted from the second transducer and received by the first transducer. The processing circuitry may form part of a control device which is fixedly attached directly or indirectly to the housing of the flow measuring device. In other embodiments the flow measuring device may comprise a processing circuitry which is provided in a control device which is separate from the housing, and which may for instance be in the form of a handheld device such as a laptop, a smart phone, a tablet, a PDA, etc. The processing circuitry may receive signals from the transducers, or from a communication unit connected to the transducers. The operational connection may be wireless, such as by Bluetooth, ZigBee or any other wireless RF technology, or the operational connection may be any suitable wired connection, even a USB cable.

According to at least one exemplary embodiment, the processing circuitry controls the first and second transmitter so that a plurality of repetitions are measured in both directions. Suitably, the processing circuitry controls the transducers to transmit their respective ultrasonic beams one after the other, and suitably in several repetitions, for increasing the accuracy. It is particularly advantageous to alternate the order in said several repetitions by changing turns, for example in the following order of measurement: upstream-downstream, downstream-upstream, upstream-downstream, downstream-upstream, etc.

### BRIEF DESCRIPTION OF THE DRAWINGS

Fig. 1 is a perspective view illustrating the interior of a flow measuring device according to at least one exemplary embodiment of the invention.
Fig. 2 is a cross-sectional view of the flow measuring device in Fig. 1.

### DETAILED DESCRIPTION

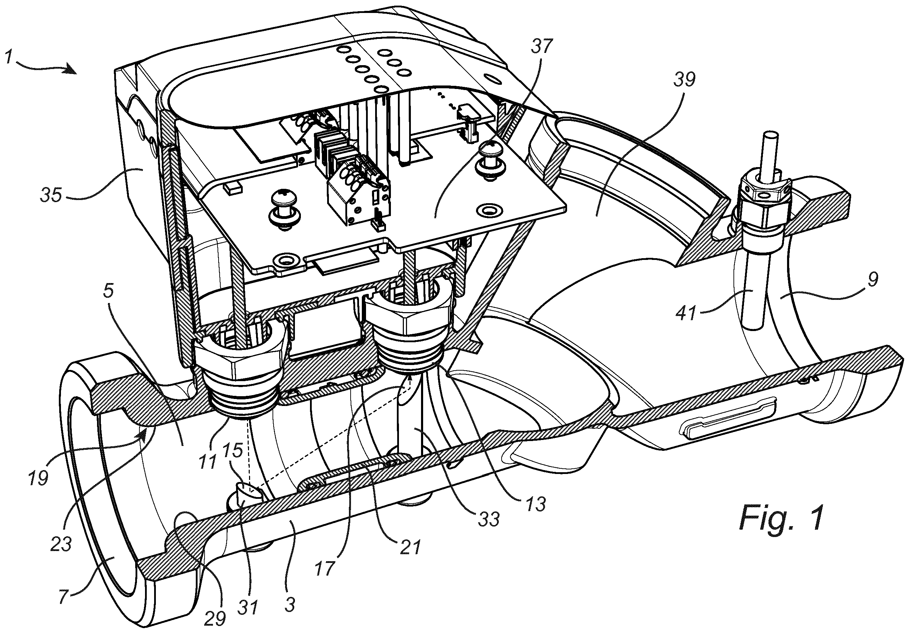

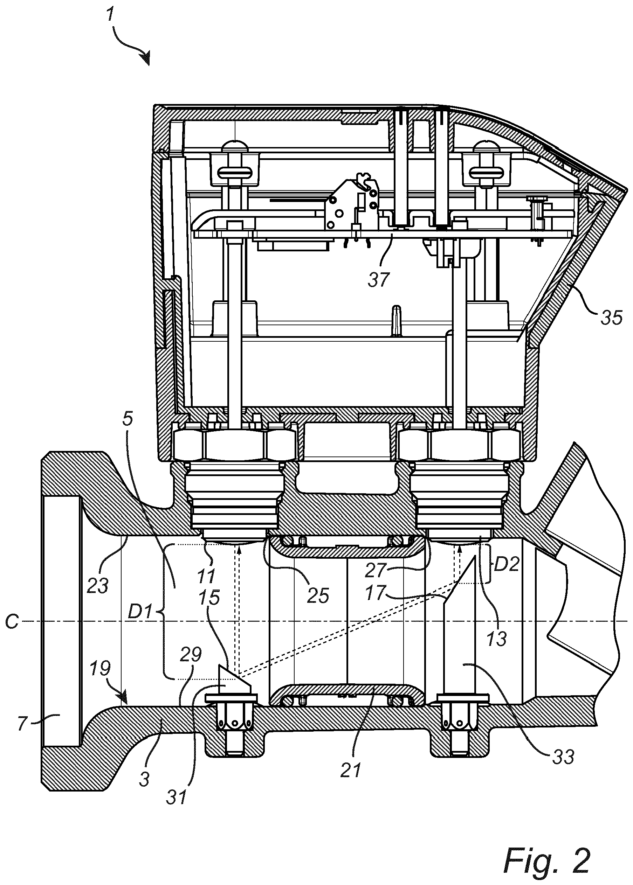

With reference to both Fig. 1 and Fig. 2, a flow measuring device 1 according to at least one exemplary embodiment of the invention is illustrated. The flow measuring device 1 comprises a housing 3. A channel 5 extends through the housing 3. The channel 5 has an inlet 7 at which liquid may enter the channel 5 and an outlet 9 at which the liquid may exit the channel 5. Thus, the outlet 9 is located downstream of the inlet 7, and the channel 5 is configured to guide the flowing liquid from the inlet 7 to the outlet 9. The inlet 7 and the outlet 9 may suitably be provided with connecting means for connecting the inlet 7 to an upstream pipe (not shown) and the outlet 9 to a downstream pipe (not shown). For instance, although not illustrated in the drawings, the inlet and the outlet may comprise threaded wall portions (such as internal/female threads) which are configured to mate with corresponding threaded portions (such as external/male threads) of the upstream pipe and the downstream pipe, respectively.

The flow measuring device further comprises a first transducer 11 and a second transducer 13. The second transducer 13 is located downstream of the first transducer 11. The first transducer 11 is configured to transmit an ultrasonic beam to be received by the second transducer 13, and the second transducer 13 is configured to transmit an ultrasonic beam to be received by the first transducer 11.

The flow measuring device also comprises a first reflecting surface 15 and a second reflecting surface 17. The second reflecting surface 17 is located downstream of the first reflecting surface 15. The first and second reflecting surfaces 15, 17 are located and directed such that an ultrasonic beam transmitted by the first transducer 11 is redirected by the first reflecting surface 15 to the second reflecting surface 17 and then to the second transducer 13. Likewise, an ultrasonic beam transmitted by the second transducer 13 is redirected by the second reflecting surface 17 to the first reflecting surface 15 and then to the first transducer 11.

In the illustrated exemplary embodiment, the channel has a geometrical centre axis C extending along a main flow direction from the inlet 7 to the outlet 9. The first reflecting surface 15 is spaced from the first transducer 11, by a first distance D1, in a direction extending at a non-zero angle relative to said geometrical centre axis C (in Fig. 2 illustrated as perpendicular to the geometrical centre axis C). Likewise, the second reflecting surface 17 is separated from the second transducer 13, by a second distance D2, in a direction extending at a non-zero angle relative to said geometrical centre axis C (in Fig. 2 illustrated as perpendicular to the geometrical centre axis C). According to the illustrated exemplary embodiment, , the second distance D2 is shorter than the first distance D1. However, in other exemplary embodiments, the distance D2 may be equal to or larger than the distance D1. For instance, the second reflecting surface 17, may be located closer to geometrical centre axis in Fig. 2 and the first transducer 11 may be located closer to the first reflecting surface 15. For example, the wall thickness at the first transducer 11 may be larger than at the second transducer 13. In such embodiment with varying wall thickness along the main flow direction it may be difficult to define a geometrical centre axis due to the varying channel diameter. Anyway, the ultrasonic beams would still follow the skewed path according to the invention. Thus, in such an exemplary embodiment as well as in the actually illustrated exemplary embodiment, the first ultrasonic beam redirected by the first reflecting surface 15 travels to the second reflecting surface 17 in a direction obliquely to said main flow direction, wherein the second ultrasonic beam redirected by the second reflecting surface 17 travels to the first reflecting surface 15 in a direction obliquely to said main flow direction.

The housing 3 has a circumferential wall 19. The channel 5 is at least partly defined by the circumferential wall 19. Between the two transducer/reflecting surface pairs, an annular restriction 21 is provided internally of and in (direct or indirect) contact with the circumferential wall 19. Thus, the first transducer 11 and the first reflecting surface 15 are located upstream of the annular restriction 21, while the second transducer 13 and the second reflecting surface 17 are located downstream of the annular restriction 21. Although the annular restriction 21 may be omitted in at least some exemplary embodiments, it has the advantage that a higher flow velocity is obtained compared to the flow velocity without the annular restriction 21. Also, the velocity profile may become more symmetrical with the annular restriction 21. Hereby, the flow measurements may be improved.

The circumferential wall 19 has a first wall portion 23, which in the drawings is illustrated as an upper wall portion. The first wall portion 23 is provided with two openings 25, 27 for receiving the first transducer 11 and the second transducer 13, respectively. The circumferential wall 19 also has a second wall portion 29, which in the drawings is illustrated as a lower wall portion. Thus, the second wall portion 29 is located diametrically opposed to the first wall portion 23.

The first reflecting surface 15 is provided on a first support 31 which extends or projects from the second wall portion 29. The second reflecting surface 17 is provided on a second support 33 which extends or projects from the second wall portion 29. In the illustrated and other exemplary embodiments, the second support 33 projects a longer distance than the first support 31 from the second wall portion 29. In other embodiments, in which at least one of the supports extends from a different location than the second wall portion 29, the extension of the second support may be equal to or shorter than the extension of the first support. For instance, in some exemplary embodiments the second reflecting surface may be provided on a second support which projects a short distance from the first wall portion 23.

As is clear from the drawings, in the illustrated exemplary embodiments, the geometrical centre axis C is located between the first transducer 11 and the first reflecting surface 15, while the second reflecting surface 17 is located between the geometrical centre axis C and the second transducer 13. However, in other exemplary embodiments, the centre of the second reflecting surface 17 may be crossed by the geometrical centre axis C.

As schematically illustrated in the drawings, an ultrasonic beam which is redirected from the first reflecting surface 15 towards the second reflecting surface 17 travels obliquely to the geometrical centre axis C between the first and second reflecting surfaces 15, 17. Similarly, an ultrasonic beam which is redirected from the second reflecting surface 17 towards the first reflecting surface 15 travels obliquely to the geometrical centre axis C between the second and first reflecting surfaces 17,15. It should be understood that, in practice, the ultrasonic beams may suitably travel in the same path in both directions, rather than in two parallel paths as shown for explanatory purposes in Fig. 2).

In the illustrated exemplary embodiment, the oblique travel of the ultrasonic beams is achieved by providing a larger inclination of the second reflecting surface 17 relative to the geometrical centre axis C than the inclination of the first reflecting surface 15 relative to the geometrical centre axis C. Put differently, the first reflecting surface 15 is, compared to the second reflecting surface 17, closer to extending in parallel with the geometrical centre axis C, while the second reflecting surface 17 is, compared to the first reflecting surface 15, closer to extending perpendicularly to the geometrical centre axis C. It should be understood that this comparison is just for illustrative explanatory purpose and should merely be seen in relative terms when comparing the two reflecting surfaces 15, 17. Thus, neither one of the reflecting surfaces 15, 17 need to be, *de facto*, close to parallel with or perpendicular to the geometrical centre axis C, but may rather have an extension closer to 45° relative to the geometrical centre axis C. Furthermore, it should be understood, that in at least some exemplary embodiment, the first and the second reflecting surface 15, 17 may have substantially the same absolute inclination (such as 45°) relative to the geometrical centre axis C, in which case one or both of the transducers 11, 13 may be configured to transmit ultrasonic beams at a direction which is non-perpendicular to the geometrical centre axis C.

The inclination of the reflecting surfaces 15, 17 may also be expressed in relation to the incident beams. A normal extending from a surface, is the direction perpendicular to that surface. For instance, the first reflecting surface 15 may have a normal which may suitably form a first angle of less than 45° relative to an incident beam from the first transducer 11 (the first angle may, for instance, be in the range of 10° - 42°, such as 35° - 42°) . Similarly, the second reflecting surface 17 may have a normal which may form a second angle of more than 45° relative to an incident beam from the second transducer 13 (the second angle may, for instance, be in the range of 48° - 80°, such as 48° - 55°). The sum of the first and second angles may suitably be 90°. The reflecting surfaces 15, 17 may be substantially planar, in which case the normal to the surface is in the same direction over the entire surface. In case of a non-planar surface, the first and the second angles are suitably measured for a normal taken at the point where the incident beams hit the respective reflecting surface.

The channel 5 has an inner diameter, measured for example at one of the first and second transducers 11, 13 perpendicularly to the geometrical centre axis C. A centre of the first reflecting surface 15 and a centre of the second reflecting surface 17 are suitably spaced from each other in a direction extending perpendicularly to said geometrical centre axis C by a distance of between 40% and 100% of said inner diameter. Alternatively, said inner diameter may suitably be defined as the inner diameter at the annular restriction 21, wherein in at least some exemplary embodiments a centre of the first reflecting surface 15 and a centre of the second reflecting surface 17 are spaced from each other in a direction extending perpendicularly to said geometrical centre axis C by a distance of between 40% and 100% of the inner diameter of the channel 5 at the annular restriction 21.

The channel 5 may also be expressed in terms of a cylindrical r-, θ-, z-coordinate system, in which the z-direction is the axial direction, i.e. coinciding with the extension of the geometrical centre axis C. The θ-direction is the angular direction around the geometrical centre axis C. Thus, the circumferential wall 19 and the annular restriction 21 each extend around the geometrical centre axis C in the angular direction. The r-direction is the radial direction, i.e. extending perpendicularly to the axial direction. Thus, in exemplary embodiments shown in the drawings, the first transducer 11 is spaced from the first reflecting surface 15 in the radial direction but not in the axial direction. Similarly, the second transducer 13 is spaced from the second reflecting surface 17 in the radial direction but not in the axial direction. The first and second transducers 11, 13 are spaced from each other in the axial direction but not in the radial direction. It should be noted that, in other exemplary embodiments, the distribution of the transducers 11, 13 and reflecting surfaces 15, 17 may be different and in which the above relationships are not valid. However, common to all embodiments, is that the first and second reflecting surfaces 15, 17 are separated from each other in the axial direction as well as in the radial direction of the channel 5.

From the above, it follows that in terms of a cylindrical coordinate system, in accordance with at least one exemplary embodiment, a centre of the first reflecting surface 15 and a centre of the second reflecting surface 17 are spaced from each other in the radial direction by a distance of between 40% and 100% of an inner diameter of the channel 5, suitably the inner diameter of the channel 5 at the annular restriction 21.

In the illustrated exemplary embodiment, the reflecting surfaces 15, 17 have been made in one piece with their respective support 31, 33. For instance, the supports and reflecting surfaces may be machined from rods, or could be machined from hot forged or die casted blanks. In other exemplary embodiments, they may be formed as separated parts that are subsequently integrated with the respective support.

Attached to the housing 3 is an electronics casing 35. The electronics casing 35 comprises a circuit board 37, which may form part of, or include, a processing circuitry being operatively connected to the first and second transducer 11, 13. The processing circuitry is configured to compare the time of flight of a first ultrasonic beam transmitted from the first transducer 11 and received by the second transducer 13, with the time of flight of a second ultrasonic beam transmitted from the second transducer 13 and received by the first transducer 11. The processing circuitry may suitably control the first and second transducer 11, 13 so that a plurality of repetitions are measured in both directions.

Although the reflecting surfaces 15, 17 have been illustrated as being provided on supports 31, 33 extending from the second wall portion 29, it should be understood that other configurations are conceivable in which the first and second reflecting surfaces 15, 17 are separated from each other in both the radial direction and the axial direction, and in which the (second) distance D2 between the second reflecting surface 17 and the second transducer 13 is shorter than the (first) distance D1 between the first reflecting surface 15 and the first transducer 11. For instance, the second reflecting surface 17 could be provided at a support extending from the first wall portion 23, i.e. from the same side of the geometrical centre axis C as the first and second transducers 11, 13. In other embodiment one or both of reflecting surfaces 15, 17 may be provided by supports extending axially from the inlet 7 and/or the outlet 9, for example supports extending from inserts at the inlet 7 and/or the outlet 9.

The flow measuring device 1 may, as in illustrated in Fig. 1, comprise a channel branch 39 for receiving a valve, such as a balancing and control valve. The channel branch is in fluid communication with the channel 5. In this exemplary embodiment the channel branch 39 is located near the outlet 9, downstream of the transducers 11, 13. Thus, the flow measuring device 1 may be used for setting a desired flow through the valve. The valve may, in some, exemplary embodiments form part of the flow measuring device 1 as such, while in other exemplary embodiments, the valve may be a separate part connectable to the flow measuring device 1. It should be noted that in other exemplary embodiments, the channel branch 39 may be completely omitted from the flow measuring device 1, and instead be included in, for instance, a downstream pipe to which the flow measuring device 1 is to be attached. As illustrated in Fig. 1, an optional temperature sensor 41 may be provided at the outlet 9, for measuring the temperature of the fluid.

## Claims

1. A flow measuring device, comprising:
- a housing,
- a channel extending through the housing, the channel having an inlet and an outlet located downstream of the inlet, wherein the channel is configured to guide a flowing liquid from the inlet to the outlet, wherein the liquid flows in a main flow direction from the inlet to the outlet,
- a first transducer,
- a second transducer, located downstream of the first transducer, wherein each one of the first and second transducer is configured to transmit an ultrasonic beam to be received by the other one of the first and second transducer,
- a processing circuitry configured to compare the time of flight of a first ultrasonic beam transmitted from the first transducer and received by the second transducer, with the time of flight of a second ultrasonic beam transmitted from the second transducer and received by the first transducer,
- a first reflecting surface,
- a second reflecting surface, located downstream of the first reflecting surface, wherein the first and second reflecting surfaces are located and directed such that the first ultrasonic beam transmitted by the first transducer is redirected by the first reflecting surface to the second reflecting surface and then to the second transducer, wherein the second ultrasonic beam transmitted by the second transducer is redirected by the second reflecting surface to the first reflecting surface and then to the first transducer, wherein the first ultrasonic beam redirected by the first reflecting surface travels to the second reflecting surface in a direction obliquely to said main flow direction, wherein the second ultrasonic beam redirected by the second reflecting surface travels to the first reflecting surface in a direction obliquely to said main flow direction.

2. The flow measuring device as claimed in claim 1, wherein the channel has a geometrical centre axis extending in or in parallel with the main flow direction, wherein an ultrasonic beam which is redirected from one of the first and second reflecting surfaces towards the other one of the first and second reflecting surfaces travels obliquely to the geometrical centre axis between the first and second reflecting surfaces.

3. The flow measuring device as claimed in claim 2, wherein the channel has an inner diameter measured from one of the first and second transducers perpendicularly to the geometrical centre axis, wherein a centre of the first reflecting surface and a centre of the second reflecting surface are spaced from each other in a direction extending perpendicularly to said geometrical centre axis by a distance of between 40% and 100% of said inner diameter.

4. The flow measuring device according to any one of claims 2-3, wherein said geometrical centre axis is located between the first reflecting surface and the first transducer, wherein the second reflecting surface is located at said geometrical centre axis or between said geometrical centre axis and the second transducer.

5. The flow measuring device as claimed in any one of claims 1-4 wherein the housing has a first wall portion and a second wall portion, wherein the second wall portion is located diametrically opposed to the first wall portion,
wherein the first and second transducers are located in the first wall portion,
wherein the first and second reflecting surfaces are provided on first and second supports, respectively, or are provided in first and second inserts, respectively,
wherein the first and second supports or inserts extend from the second wall portion.

6. The flow measuring device as claimed in claim 5, wherein the first reflecting surface is made in one piece with the first support and the second reflecting surface is made in one piece with the second support.

7. The flow measuring device as claimed in any one of claims 1-6, wherein the first reflecting surface has a normal which forms a first angle of less than 45° relative to an incident beam from the first transducer.

8. The flow measuring device as claimed in claim 7, wherein the first angle is in the range of 10° - 42°, such as 35° - 42°.

9. The flow measuring device as claimed in any one of claims 7-8, wherein the second reflecting surface has a normal which forms a second angle of more than 45° relative to an incident beam from the second transducer.

10. The flow measuring device as claimed in claim 9, wherein the second angle is in the range of 48° - 80°, such as 48° - 55°.

11. The flow measuring device as claimed in any one of claims 9-10, wherein the sum of the first and second angles is 90°.

12. The flow measuring device as claimed in any one of claims 1-11, wherein the first reflecting surface is spaced from the first transducer by a first distance, and wherein the second reflecting surface is spaced from the second transducer by a second distance, wherein the second distance is shorter than the first distance, wherein said first distance is measured from the first transducer to the centre of the first reflecting surface, and said second distance is measured from the second transducer to the centre of the second reflecting surface.

13. The flow measuring device as claimed in any one of claims 1-12, wherein the first reflecting surface is spaced from the first transducer along a first direction forming an angle of 80°-100°, suitably 90°, relative to said main flow direction, and wherein the second reflecting surface is spaced from the second transducer along a second direction forming an angle of 80°-100°, suitably 90°, relative to said main flow direction.

14. The flow measuring device as claimed in any one of claims 1-13, wherein the processing circuitry controls the first and second transmitter so that a plurality of repetitions are measured in both directions.
